(19) Europäisches Patentamt / European Patent Office / Office européen des brevets

(11) **EP 1 881 589 A1**

(12) **EUROPEAN PATENT APPLICATION**

(43) Date of publication:
**23.01.2008 Bulletin 2008/04**

(51) Int Cl.:
**H02M 3/07** (2006.01)

(21) Application number: **06425497.2**

(22) Date of filing: **19.07.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **STMicroelectronics S.r.l.**<br>**20041 Agrate Brianza (Milano) (IT)** | (72) Inventors:<br>• **Conte, Antonino**<br>**95030 Tremestieri Etneo (CT) (IT)**<br>• **Ucciardello, Carmelo**<br>**95126 Catania (IT)**<br><br>(74) Representative: **Ferrari, Barbara**<br>**Botti & Ferrari S.r.l.,**<br>**Via Locatelli, 5**<br>**20124 Milano (IT)** |

(54) **Charge pump circuit**

(57) A charge pump circuit (10) of the latch type is described comprising at least one first and a second charge pump stage (CBi-1,CBi) interconnected in correspondence with an intermediate circuit node (INT), in turn comprising:
- first pump capacitors (CUpi-1,CUpi), (FX,FN) and respective (Upi-1,Upi);
- second pump capacitors (CDowni-1,CDowni) and respective
- latch transistors (MpU,MnU;MpD,MnD) inner circuit nodes (Upi-1,Upi;Downi-1),

first and second enable terminals (FX,FN) receiving respective phase signals (FX,FN), the one complementary to the other.

A stabilisation circuit (20) having at least one stabilisation stage (20) inserted between the intermediate circuit node (INT) and these first and second enable terminals (FX, FN) and connected to control terminals (PgU,NgU;PgD, NgD) of the latch transistors (MpU,MnU;MpD,MnD) and apt to supply them with suitable control signals for ensuring their correct turn-on and turn-off during a charge sharing period of the charge pump circuit (10).

FIG. 7

EP 1 881 589 A1

**Description**

Field of application

The present invention relates to a charge pump circuit.

More specifically, the invention relates to a charge pump circuit of the latch type comprising at least one first and one second charge pump stage interconnected in correspondence with an intermediate circuit node, in turn comprising:

- first pump capacitors respectively inserted between a first and a second enable terminal and respective first inner circuit nodes;

- second pump capacitors respectively inserted between said second and said first enable terminal and respective second inner circuit nodes; as well as

- latch transistors inserted between each of said first and second inner circuit nodes and said intermediate circuit node,

said first and second enable terminals receiving respective phase signals, the one complementary to the other.

The invention thus particularly, but not exclusively, relates to a charge pump circuit of the two-phase latch type and the following description is made with reference to this field of application for simplifying the description only.

Prior art

Charge pump circuits are widely used in a lot of electronic devices for obtaining voltage values higher than a supply reference by using capacitors as charge storage elements.

A classic charge pump circuit comprises four capacitors suitably connected to four enable signals or phases of the charge pump circuit.

It is however known that a four-phase charge pump circuit is able to operate in a range of frequencies equal to 10-50 Mhz, such range being however insufficient for many applications, in particular in all those applications where it is essential to save area since the increase of the phase frequency allows to reduce the sizes of the pump capacitors and thus the area occupation of the circuit as a whole.

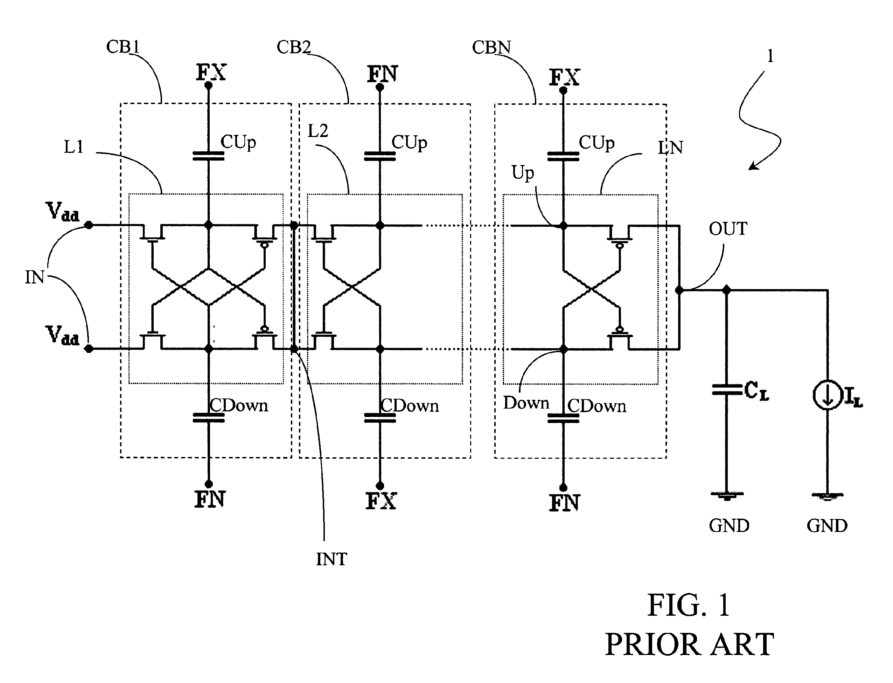

It is thus known to realise charge pump circuits of the latch type, such as the one schematically shown in Figure 1, globally indicated with 1.

The charge pump circuit 1 has an input terminal IN connected to a first voltage reference, in particular the supply voltage Vdd and an output terminal OUT connected to a load, schematised through the parallel of a load capacitor CL and a generator of a load current IL inserted between this output terminal OUT and a second voltage reference, in particular the ground GND.

The charge pump circuit 1 thus comprises a plurality of N charge pump stages CB1...CBN inserted in cascade between the input IN and output OUT terminals and connected to a first FX and a second enable terminal FN supplying respective first and second enable signals or phases, by way of simplicity likewise indicated with the reference signs FX and FN. In particular, the enable signals or phases FX and FN are the one complementary to the other.

The charge pump circuit 1 is thus a two-phase circuit, able to operate at quite high frequencies (100 Mhz and more), thanks to the presence of suitable latch circuits L1..LN being inserted in each charge pump circuit.

More in detail, each charge pump stage CBN comprises at least one first CUp and one second pump capacitor CDown inserted between the first enable terminal FX and a first inner circuit node Up and between the second enable terminal FN and a second inner circuit node Down, respectively.

Each pump charge stage CBN also comprises a respective latch circuit LN, inserted between the first Up and the second inner circuit node Down and comprising low voltage transistors. In particular, each latch circuit LN comprises at least one pair of N channel MOS transistors and a pair of P channel MOS transistors, suitably connected to form opposite pairs of CMOS switches having control or gate terminals connected to the enable terminals FX and FN, for the switched connection (and the relative charge sharing) of the pump capacitors, CUp and CDown, respectively.

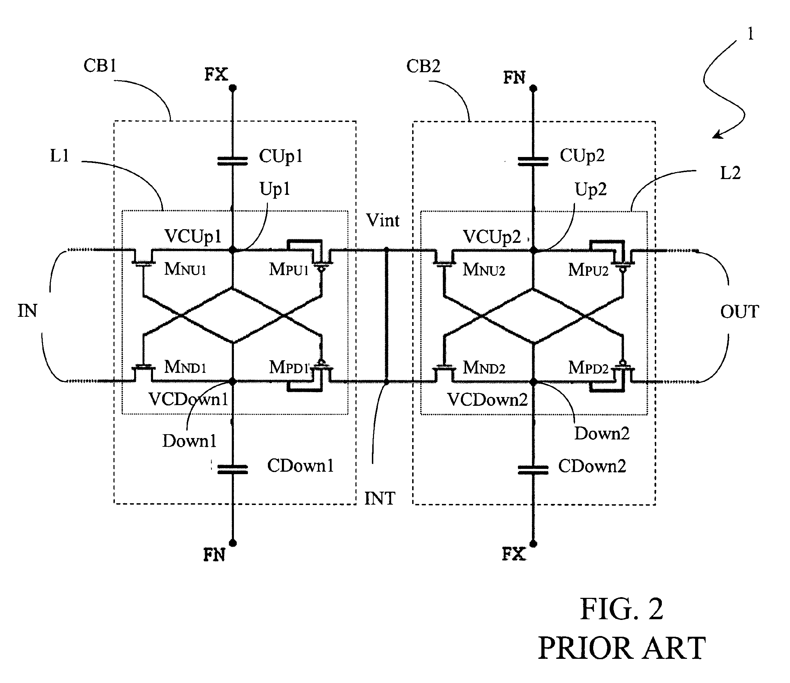

For better understanding the operation of the charge pump circuit 1 of the latch type, reference will be hereafter made to the simplified scheme of Figure 2, where only a first CB 1 and a second charge pump stage CB2 are considered.

In particular, the charge pump stages, CB1 and CB2, are placed in parallel and work with each other in phase opposition, the enable signals or phases FX and FN being, at any time, the one complementary to the other. Thus, for example, when the first phase FN is high (for example, it has a voltage value next to that of the supply voltage Vdd), the second phase FX is low (for example, it has a voltage value next to the ground GND).

More in detail, the first charge pump stage CB1 comprises:

- a first pump capacitor CUp1 inserted between the first enable terminal FX and a first inner circuit node Up1;

- a second pump capacitor CDown 1 inserted between the second enable terminal FN and a second inner circuit node Down 1; and

- a first latch circuit L1, inserted between the first Up1 and the second inner circuit node Down1 and connected to an input terminal IN and to an intermediate circuit node INT.

In particular, the first latch circuit L1 comprises a first N channel MOS transistor $M_{NU1}$ and a second P channel MOS transistor $M_{PU1}$ having common bulk and drain terminals, connected, in series to each other, between the input terminal IN and the intermediate circuit node INT and having the control or gate terminals connected to each other and to the second inner circuit node Down1 to form a first CMOS switch. The first latch circuit L1 comprises, in a dual way, a third N channel MOS transistor MND1 and a fourth P channel MOS transistor MPD1 having common bulk and drain terminals, connected, in series to each other, between the input terminal IN and the intermediate circuit node INT and having the control or gate terminals connected to each other and to the first inner circuit node Up 1 to form a second CMOS switch.

In a similar way, the second charge pump stage CB2 comprises:

- a third charge pump capacitor CUp2 inserted between the second enable terminal FN and a third inner circuit node Up2;

- a fourth pump capacitor CDown2 inserted between the first enable terminal FN and a fourth inner circuit node Down 1; and

- a second latch circuit L2, inserted between the third Up2 and the fourth inner circuit node Down2 and connected to the intermediate circuit node INT and to the output terminal OUT.

In particular, the second latch circuit L2 comprises a fifth N channel MOS transistor MNU2 and a sixth P channel MOS transistor MPU2 having common bulk and drain terminals, connected, in series to each other, between the intermediate circuit node INT and the output terminal OUT and having control or gate terminals connected to each other and to the fourth inner circuit node Down2 to form a third CMOS switch. The second latch circuit L2 comprises, in a dual way, a seventh N channel MOS transistor MND1 and an eighth P channel MOS transistor MPD1 having common bulk and drain terminals, connected, in series to each other, between the intermediate circuit node INT and the output terminal OUT and having the control or gate terminals connected to each other and to the third inner circuit node Up1 to form a fourth CMOS switch.

Under these conditions, it is immediate to verify that the fourth transistor MPD 1 of the first latch circuit L1 and the seventh transistor MND2 of the second latch circuit L2 are on and allow a charge sharing between the second and the fourth pump capacitor, Cdown1 and Cdown2, and thus the charge sharing between the third pump capacitor Cup2 and the output terminal OUT, while the second transistor MPU1 of the first latch circuit L1 and the fifth transistor MNU2 of the second latch circuit L2 are off. In other words, these transistors act as pass-transistors for the charge sharing carried out by the charge pump circuit 1.

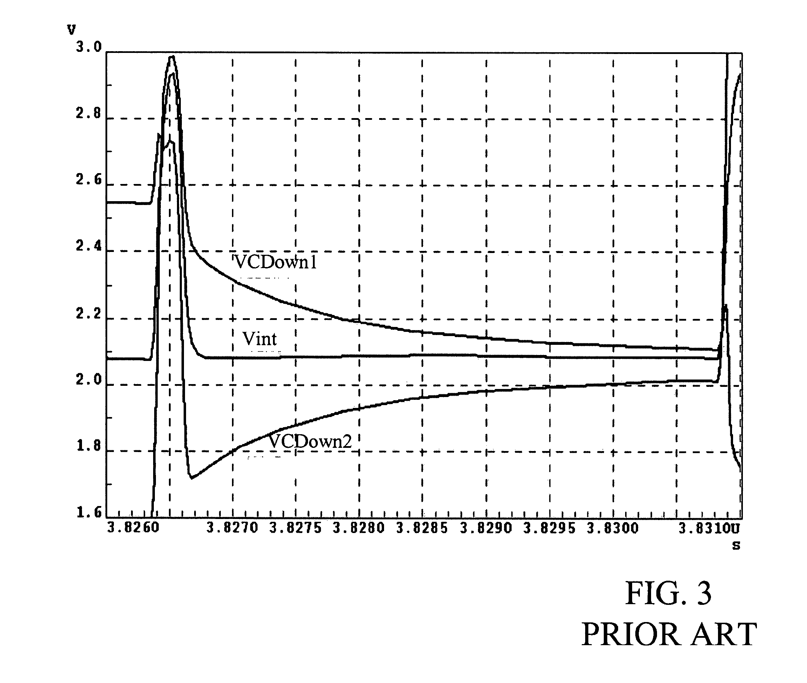

It is interesting to note that the voltage value VInt on the intermediate circuit node INT is maintained practically constant during the whole clock period, as shown in Figure 3, where the typical pattern of voltage signals VCDown and VCDown2 at the inner circuit nodes Down1 and Down2 of the stages CB1 and CB2 is illustrated, together with the voltage signal Vint on the intermediate circuit node INT.

It is to be noted that the widening of the operation frequency range allows a reduction of the sizes of the charge pump capacitors CUp and CDown and thus of the area occupation.

However, the use of these same charge pump capacitors CUp and CDown for the turn-on and turn-off of the latch circuit transistors allows, on one side, to obtain a significant circuit simplification for the charge pump circuit 1 but, on the other, constitutes a limit of the latch circuits current supply, in particular when the supply voltage Vdd approaches the threshold voltage of the transistors comprised in these latch circuits or when the charge pump circuit 1 is asked to supply a higher and higher current value.

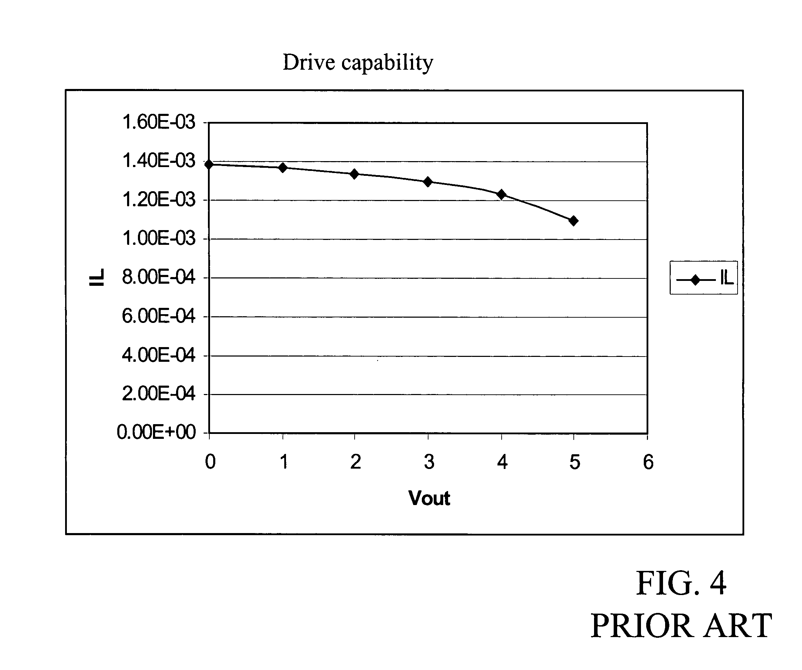

It is in fact possible to verify that, when the supply voltage Vdd decreases, the charge pump circuit 1 does not succeed in supplying a sufficient load current IL, as shown in Figure 4, where the current-voltage characteristic [I-V] of a charge pump circuit 1 realised according to the prior art is shown for a supply voltage value Vdd equal to 1V. In particular, it is shown how the I-V characteristic of the charge pump circuit 1 falls down for output voltage Vout values higher than 4V.

For overcoming this limit, it is possible to increase the sizes of the transistors contained in the latch circuits and of the charge pump capacitors CUp and CDown so as to meet the specifications required, however nullifying the simplicity of the charge pump circuit 1.

Moreover, it is possible to experimentally verify that it is not however possible to obtain sufficient values of the load current IL for several applications, in particular in all those circuits where the supply voltage is next to the threshold voltage of the transistors, also over-sizing the charge pump circuit 1.

This limit has become more and more problematic during the last years where the trend has been that of having lower and lower supply voltages.

The technical problem underlying the present invention is that of providing a charge pump circuit, having such structural and functional characteristics as to allow its correct operation for low supply voltages, in particular below 1V, overcoming the limits and the drawbacks still affecting the circuits realised according to the prior art.

## Summary of the invention

The solution idea underlying the present invention is that of providing the charge pump circuit with a stabilisation circuit connected to the same enable terminals and able to ensure a correct basing of the transistors comprised in the latch circuits during the periods of charge sharing.

On the basis of this solution idea the technical problem is solved by a charge pump circuit as previously indicated and defined by the characterising part of claim 1.

The characteristics and the advantages of the charge pump circuit according to the invention will be apparent from the following description given by way of indicative and non limiting example with reference to the annexed drawings.

## Brief description of the drawings

In these drawings:

- Figures 1 and 2 schematically show a charge pump circuit of the latch type realised according to the prior art;

- Figures 3 and 4 schematically show the pattern of signals inside the charge pump circuit of Figure 2;

- Figures 5A-5D shows functional schemes of the circuit of Figure 2;

- Figure 6 shows the pattern of signals inside the circuit of Figure 2 under charge sharing operation conditions;

- Figure 7 schematically shows a charge pump circuit realised according to the invention;

- Figure 8 shows the pattern of signals inside the circuit of Figure 7;

- Figure 9 shows the trend of current-voltage characteristics of the known circuit shown in Figure 2 and of the circuit according to the invention shown in Figure 7;

- Figure 10 shows the pattern of phase signals applied to the circuit of Figure 7;

- Figure 11 shows the pattern of signals inside the circuit of Figure 7 when the phase signals of Figure 10 are applied thereto;

- Figure 12 schematically shows an alternative embodiment of the charge pump circuit according to the invention;

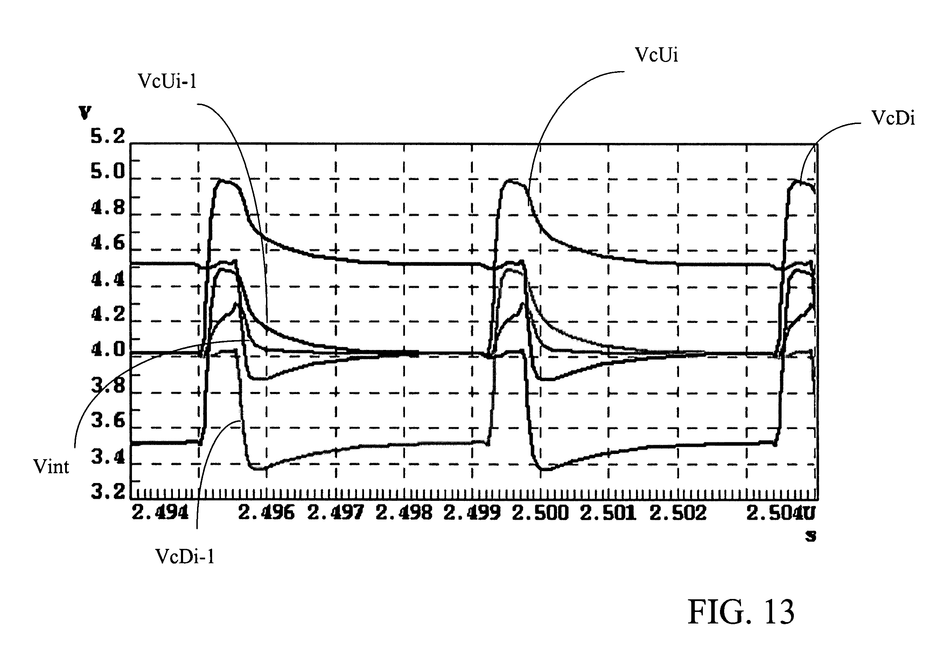

- Figure 13 shows the pattern of signals inside the circuit of Figure 12;

- Figure 14 schematically shows a second alternative embodiment of the charge pump circuit according to the invention; and

- Figure 15 shows in depth a detail of the charge pump circuit of

Figure 14.

Detailed description

To understand the mechanisms at the basis of the limitation of the current supplied by a latch charge pump circuit latch realised according to the prior art, first of all the potential difference values between its several inner circuit nodes are analysed under the different operation conditions of the circuit itself.

For simplicity of illustration, reference is made to a simplified scheme similar to the one of Figure 2, i.e. to a charge pump circuit comprising at least two charge pump circuits, a generic charge pump circuit being indicated as BCj.

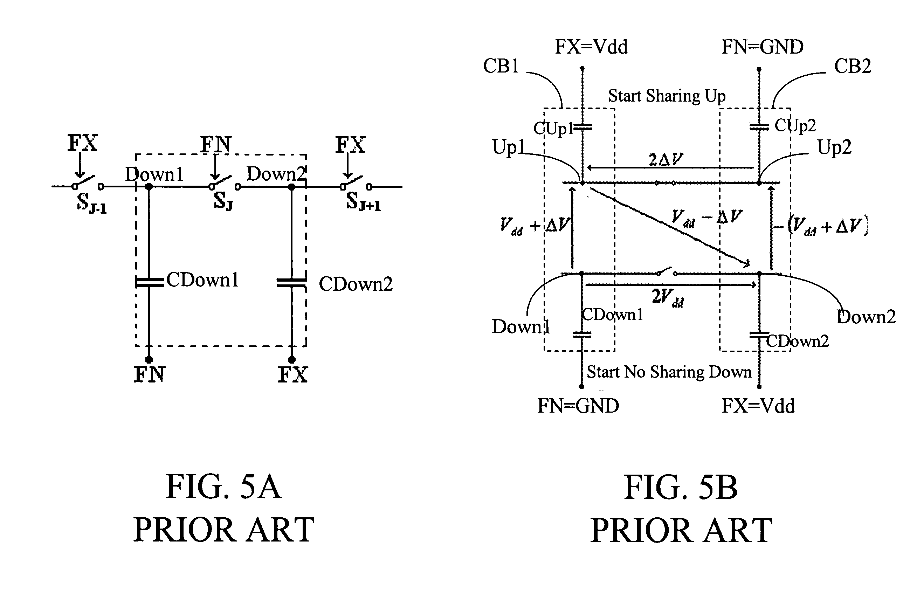

A first operation condition, the simplest and most intuitive one, is that of charge sharing end or "End Sharing", as schematically shown in Figure 5A, where the voltage difference between the nodes Up and Down is obviously void, i.e.:

$$V_{UpDown_{End\_Sh}} = 0V \qquad (1)$$

all the CMOS switches of this charge pump stage CBj, just as of the stages preceding it (j-i) and following it (j+1) being in open conditions, as shown in this Figure.

During the sharing, the voltage at the node Up is reduced by an amount equal to:

$$\Delta V \left( \Delta V = \frac{I_L T}{C} \right) \qquad (2)$$

while the one at the node Down grows by the same amount, thus at the beginning of the sharing it results:

$$V_{UpDown_{Start\_Sh}} = 2\Delta V \qquad (3)$$

In particular, starting from the moment of sharing end, the phases FX and FN switch and, in consequence, the voltage at the node Up decreases below the supply voltage value Vdd, while the one at the node Down increases by the same amount.

Thus, in a no sharing semi-period (no Sharing) of the stage j, the potential difference value between its nodes Up and Down is equal to:

$$V_{UpDown_{Start\_NoSh}} = 2Vdd \qquad (4)$$

In this charge no sharing semi-period for the stage j, the stages (j-1) and (j+1) adjacent thereto are, in reality, under charge sharing conditions and the first pump capacitor Cup connected to the node Up of the stage j thus receives charge from the one of the preceding stage (j-1) and the second pump capacitor CDown connected to the node Down of the stage j gives charge to the one of the successive stage (j+1).

At the end of the charge no sharing semi-period for the stage j, the voltage at the node Up is thus increased by ΔV while the one at the node Down is reduced by ΔV, obtaining:

$$V_{UpDown_{End\_NoSh}} = 2Vdd - 2\Delta V \qquad (5)$$

The conditions analysed up to now are, for convenience, summarised in the following table 1:

| Difference of potential between the nodes Up and Down | Operative condition stage j |
|---|---|
| $V_{UpDown\,End\_Sh} = 0V$ | Sharing end between Up and Down |
| $V_{UpDown\,Start\_NoSh} = 2Vdd$ | Non sharing start between Up and Down |
| $V_{UPDawn\,End\_NoSh} = 2Vdd - 2\Delta V$ | Non sharing end between Up and Down |
| $V_{UpDown\,Start\_Sh} = 2\Delta V$ | Sharing start between Up and Down |

Table 1

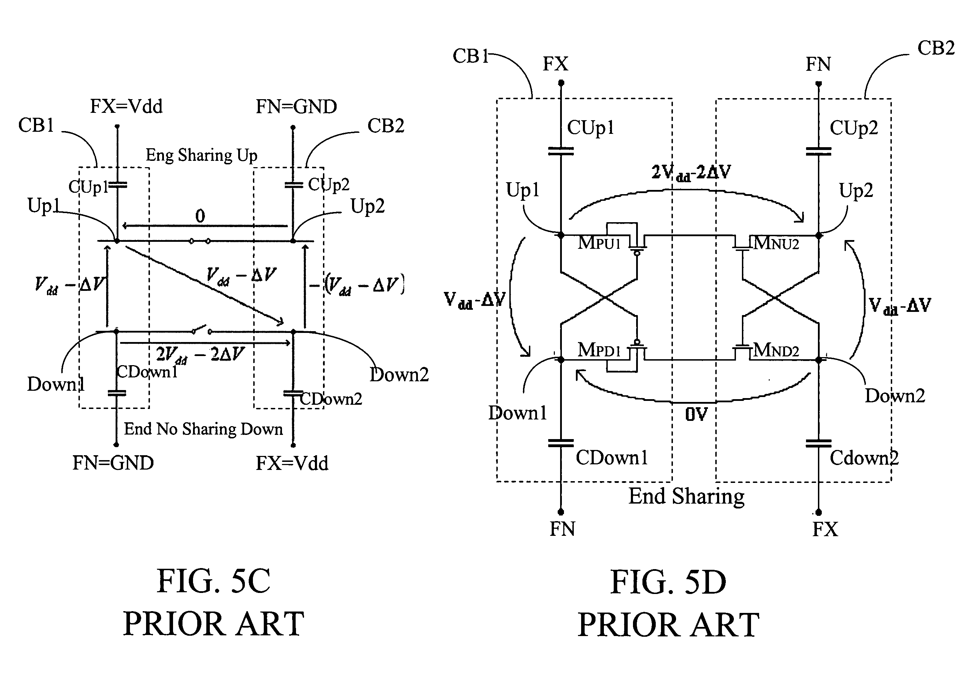

In particular, considering the interaction between two charge pump stages CB1 and CB2 operating in phase opposition, with the enable voltages or phases taking the values of the supply voltage Vdd and of the ground GND (although these values are not binding) it is possible to evaluate the differences of potential between the two nodes Up and Down during the operation as shown in Figures 5B and 5C, obtaining what follows:

- Under the Start Sharing Up and Start No Sharing Down conditions for FX=Vdd and FN=GND, as shown in Figure 5B, it follows:

  - the voltage difference between the nodes Up1 and Up2 is equal to 2ΔV, these nodes being connected to a closed switch;

  - the voltage difference between the nodes Up1 and Down1 is equal to Vdd+OV;

  - the voltage difference between the nodes Down and Down2 is equal to 2Vdd, these nodes being connected to an open switch; and

  - the voltage difference between the nodes Up2 and Down2 is equal to -(Vdd+ΔV).

- Under the End Sharing Up and End No Sharing Down condition for FX=Vdd and FN=GND, as shown in Figure 5C, it follows:

  - the voltage difference between the nodes Up1 and Up2 is equal to OV, these nodes being connected to a closed switch;

  - the voltage difference between the nodes Up1 and Down1 is equal to Vdd-ΔV;

  - the voltage difference between the nodes Down1 and Down2 is equal to 2Vdd-2ΔV, these nodes being connected to an open switch; and

  - the voltage difference between the nodes Up2 and Down2 is equal to -(Vdd-ΔV).

Re-considering now the pass-transistors of the latch circuits of the charge pump stages, as shown in Figure 5D, it occurs that, for a correct operation of the shown charge pump circuit, it is necessary that these transistors remain on during all the semi-period in which the charge sharing between the relative charge pump stages takes place. Thus, it is necessary that the following condition is met:

$$V_{dd} - \Delta V \geq |V_{th}| \qquad\qquad (6)$$

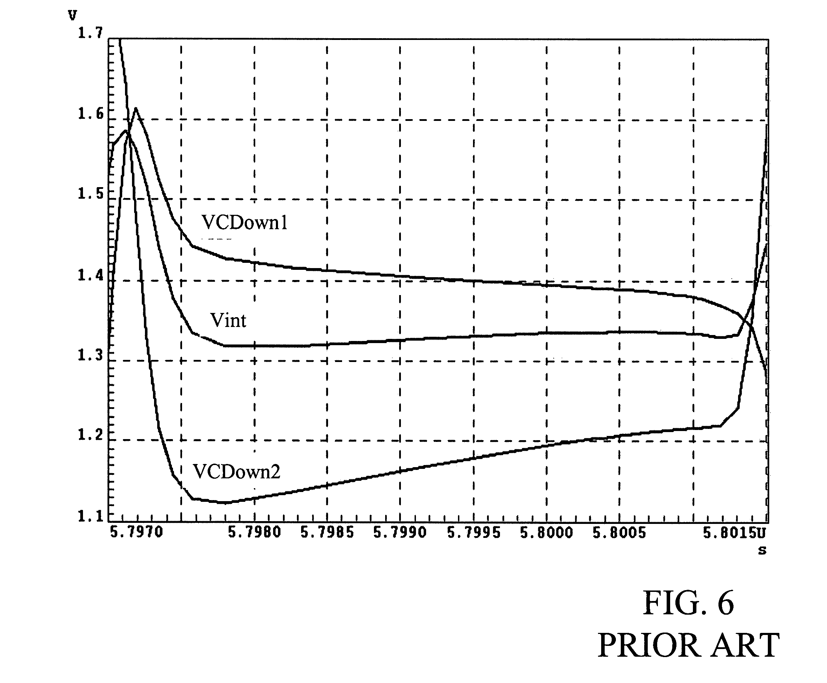

Both when the supply voltage Vdd decreases and when the supplied current increases, as already shown, this condition becomes more and more difficult to be ensured, and the transistors are turned off before the charge sharing is completed, obtaining a significant degradation of the supplied current, as shown in Figure 6, in particular relative to a supply voltage value Vdd=1V.

In this case, the current and output voltage characteristic loses its linearity and does not follow any more the rule:

$$V_{out} = (N+1)V_{dd} - N\frac{I_L}{C_p f} \qquad (7)$$

which is typical of the charge pump stages, as already shown in Figure 4.

In fact, it occurs that the latch charge pump circuit realised according to the prior art exploits the voltages at the nodes Up and Down where the pump capacitors are connected for turning on and off the transistors comprised in the latch circuits connected to these nodes. These voltages are not however constant during the charge sharing periods, but vary during each Sharing and No Sharing start and end semi-period, reducing the biasing of the control or gate terminals of these transistors, until they are completely turned off as previously explained.

In substance, the problem of the latch charge pump circuit realised according to the prior art arises from the fact that with the potentials at stake it is not possible to correctly turn on the transistors of the latch circuits comprised in the charge pump stages, in particular the pass-transistors which realise the passage of charge from a charge pump stage to the successive one inside the circuit when the supply voltage values approach the threshold voltage values of these transistors, in particular at 1V.

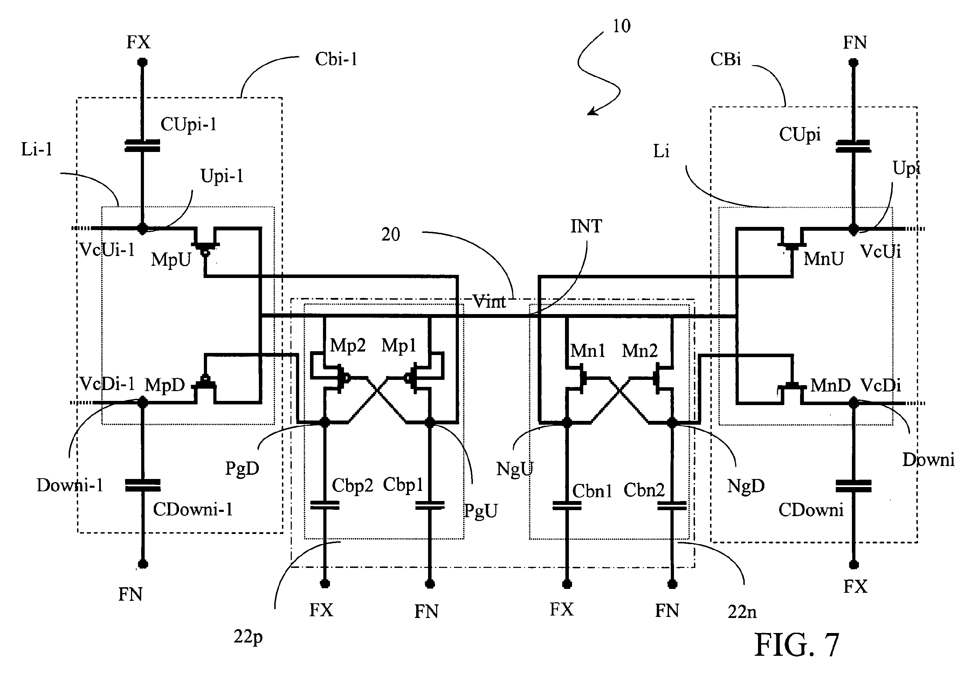

Advantageously according to the invention, a latch charge pump circuit is proposed of the type comprising a stabilisation circuit, as schematically shown in Figure 7, globally indicated with 10.

In summary, the stabilisation circuit inserted in the charge pump circuit 10 according to the invention is used for maintaining the biasing voltages applied to the control or gate transistors comprised in the latch circuits of the charge pump stages itself constant during a charge sharing semi-period, for ensuring their correct turn-on and turn-off.

In particular, the stabilisation circuit comprises a plurality of stabilisation stages included in each charge pump stage and connected to an intermediate circuit node Int as well as to the enable terminals FX and FN.

For simplicity of illustration, reference will be made hereafter to a charge pump circuit 10 comprising a first CBi-1 and a second charge pump stage CBi. As seen in connection with the previously described prior art circuit, each charge pump stage CB is connected between a first FX and a second enable terminal FN, receiving respective enable signals or phases, also designated as FX and FN, these phases being the one complementary to the other (stages driven in phase opposition) and comprises at least one first CUp and one second pump capacitor CDown (the suffixes i-1 and i indicating hereafter corresponding elements of the charge pump stages CBi-1 and CBi). In particular, the phases Fx and Fn can take a high value, for example corresponding to the supply voltage Vdd, and a low value, for example corresponding to the ground GND; it is to be underlined that these values are not to be considered as binding, any voltage value offering the possibility to be used when respecting the following limitations: it will have to be higher than the threshold voltage of the transistors, so as not to slip back into the problem described in connection with the prior art, and lower than the maximum voltage bearable by the transistors of the used technology, for avoiding their breakage.

In particular, the first pump capacitor CUp is inserted between the first enable terminal FX and a first inner circuit node Up and the second pump capacitor CDown is inserted between the second enable terminal FN and a second inner circuit node Down.

Each charge pump stage CB also comprises a latch circuit L, inserted between the first Up and the second inner circuit node Down and connected to an intermediate circuit node INT. The latch circuit L comprises suitable transistors with switch or pass-transistor function.

For simplicity of illustration, Figure 7 only shows the transistors involved in the charge sharing between the stages and in particular:

- a first transistor MpU of the latch circuit Li-1 of the first charge pump stage CBi-1, inserted between the intermediate circuit node INT and the first inner circuit node UPi-1 of this first stage CBi-1 and having a first control terminal PgU, corresponding to the gate terminal of the first transistor MpU;

- a second transistor MpD of the latch circuit Li-1 of the first charge pump stage CBi-1, inserted between the intermediate circuit node INT and the second inner circuit node Downi-1 of this first stage CBi-1 and having a second control terminal PgD, corresponding to the gate terminal of the second transistor MpD;

- a third transistor MnU of the latch circuit Li of the second charge pump stage CBi, inserted between the intermediate circuit node INT and the first inner circuit node UPi of this second stage CBi and having a third control terminal NgU, corresponding to the gate terminal of the third transistor MnU;

- a fourth transistor MnD of the latch circuit Li of the second charge pump stage CBi, inserted between the intermediate circuit node INT and the second inner circuit node Downi of this second stage CBi-1 and having a fourth control terminal NgD, corresponding to the gate terminal of the fourth transistor MnD.

The transistors comprised in the latch circuits of the charge pump circuits essentially have the function of switches for allowing the charge sharing between corresponding pump capacitors, i.e. connected to the nodes Up, respectively Down.

In particular, in the example shown in Figure 7, the first and the second transistor, MpU and MpD, of the latch circuit Li-1 of the first charge pump stage CBi-1 are P channel MOS transistors, while the third and the fourth transistor, MnU and MnD, of the latch circuit Li of the second charge pump stage CBi are N channel MOS transistors.

Advantageously according to the invention, the charge pump circuit 10 also comprises a stabilisation block 20 inserted between the intermediate circuit node INT and the enable terminals, FX and FN, and connected to said control or gate terminals of the transistors of the latch circuits L inside the charge pump stages.

In particular, the stabilisation circuit 20 comprises a plurality of stabilisation stages, connected between pairs of consecutive charge pump stages, a single stabilisation stage being shown in Figure 7, only two charge pump stages being present, this stage being also indicated with the reference sign 20.

Suitably, each stabilisation stage 20 comprises at least one first 22p and one second basing portion 22n suitably connected to the transistors of the latch circuit L of the charge pump stages.

In particular, the first biasing portion 22p comprises:

- a first biasing capacitor Cbp1 inserted between the first control terminal PgU and the second enable terminal FN;

- a second biasing capacitor Cbp2 inserted between the second control terminal PgD and the first enable terminal FX;

- a first control transistor Mp1, inserted between the intermediate circuit node INT and the first control terminal PgU and having a control or gate terminal connected to the second control terminal PgD; and

- a second control transistor Mp2, inserted between the intermediate circuit node INT and the second control terminal PgD and having a control or gate terminal connected to the first control terminal PgU.

In a similar way, the second biasing portion 22n comprises:

- a third biasing capacitor Cbn1 inserted between the third control terminal NgU and the first enable terminal FX;

- a fourth biasing capacitor Cbp2 inserted between the fourth control terminal NgD and the second enable terminal FN;

- a third control transistor Mn1, inserted between the intermediate circuit node INT and the third control terminal NgU and having a control or gate terminal connected to the fourth control terminal NgD; and

- a fourth control transistor Mn2, inserted between the intermediate circuit node INT and the fourth control terminal NgD and having a control or gate terminal connected to the third control terminal NgU.

Suitably, the first and second control transistors, Mp1 and Mp2, are of the same type as the first and second transistors, MpU and MpD, of the latch circuit Li-1 of the first charge pump stage CBi-1, i.e. they are P channel MOS transistors, while the third and fourth control transistors, Mn 1 and Mn2, are of the same type as the third and fourth transistors, MnU and MnD, of the latch circuit Li of the second charge pump circuit CBi, i.e. they are N channel MOS transistors.

As previously seen, the voltage signal Vint at the intermediate circuit node INT remains constant and is used for correctly driving the turn-on and turn-off of the latch transistors. Moreover, VcU and VcD also indicate the voltage signals at the nodes Up e Down, respectively, of each charge pump stage CB. Furthermore, also in this case the phases FX and FN are, at any time, the one complementary to the other.

It is possible to distinguish two different operative conditions equivalent to each other:

- FN=Vdd , FX=O, VcDi-1 goes high and VcUi-1 goes low, VcDi is low while VcUi is high. In this case, the node PgU goes high (to a value equal to Vint) while the node PgD goes low (in particular, by an amount equal to Vdd with respect to Vint), thus allowing to turn on the transistor MpD and to turn off the transistor MpU. In the same semiperiod, the node NgD goes high (by an amount equal to Vdd with respect to Vint) and the node NgU goes low. Thus, the transistor MnD is turned on, while the transistor MnU is turned off. In this way, the charge sharing between the two adjacent pump capacitors connected to the terminals Downi-1 and Downi is obtained, while it is prevented between the two adjacent pump capacitors connected to the terminals Upi-1 and Upi.

- FN=Vdd, FX =0; in this case the charge pump circuit 10 operates in a fully similar way to the previous situation.

It is to be noted that, advantageously according to the invention, during the two semi-periods in which the nodes PgD, PgU, NgD, NgU, go high or low, they remain, for all the time of the sharing, always constant, and at such a voltage as to allow an efficient turn-on and turn-off of the transistors comprised in the latch circuits and connected thereto.

More in detail, for understanding the operation of the charge pump circuit 10 according to the invention, let's consider that at the beginning of a charge sharing step between the pump capacitors connected to the nodes Up of the charge pump stages, thus with the first phase FX at Vdd and the second phase FN at zero.

During this period, the latch transistors connected to the nodes Up, i.e. the first transistor MpU and the third transistor MnU, must be well on while those connected to the nodes Down, i.e. the second transistor MpD and the fourth transistor MnD well off so as not to favour any charge return.

Advantageously according to the invention, the stabilisation stage 20 of the charge pump circuit 10 according to the invention creates potentials not only capable of driving in an efficient way the control terminals of the latch transistors, but especially capable of doing it during all the sharing period.

In fact, during this sharing period, the potentials obtained remain constant, which did not occur for the charge pump circuit 1 realised according to the prior art.

In particular, considering the charge sharing condition of the capacitors connected to the nodes Up, it occurs that, at the start of the sharing period, when the phase FX goes to Vdd, the node PgD, which previously was at Vint-Vdd, now rises and goes to Vint. This value makes the second latch transistor MpD turn off just as the first control transistor Mp1.

As regards the node PgU, in the preceding period it had gone to Vint while now, since the phase FN has decreased to zero, it goes to Vint-Vdd. This value makes the first latch transistor MpU turn on just as the second control transistor Mp2.

For the node NgU, it was at the value Vint and goes to Vint+Vdd allowing the turn-on of the third latch transistor MnU and, in a corresponding way, of the fourth control transistor Mn2.

Finally, the node NgD that had previously gone to the value Vint+Vdd is discharged through the fourth control transistor Mn2 to the value Vint causing the turn-off of the fourth latch transistor MnD and of the third control transistor Mn1.

The potential values obtained with the charge pump circuit 10 according to the invention, during a sharing of the capacitors connected to the nodes Up, can be summarised as follows:

| PgD | Vint |
|-----|------|
| PgU | Vint-Vdd |
| NgU | Vint+Vdd |
| NgD | Vint |

Table 2

It is to be noted that the potential value obtained by the charge pump circuit 10 according to the invention allow to correctly turn on the latch transistors MpU and MnU connected to the nodes Up and to turn off the latch transistors MpD and MnD connected to the nodes Down and especially to do it for the whole period in which the charge sharing between the capacitors connected to the nodes Up occurs.

It is immediate to verify that the same conditions occur in the dual case of charge sharing of the pump capacitors connected to the nodes Down, during a successive charge sharing period, obtaining the following potential values:

| PgD | Vint-Vdd |
|-----|------|
| PgU | Vint |
| NgU | Vint |
| NgD | Vint+Vdd |

Table 3

In this way, the charge pump circuit 10 according to the invention operates correctly also for supply voltages Vdd having value next to the threshold voltage value of the transistors, in particular equal to 1V.

In substance, the control transistors, Mp1 and Mp2, respectively Mn1 and Mn2, comprised in the stabilisation stage 20, allow the respective biasing capacitors, Cbp1 and Cbp2, respectively Cbn1 and Cbn2, to update with respect to the voltage at the node they refer to and to recover that charge lost for correctly driving the latch transistors.

According to the invention, these biasing capacitors generate the voltages serving to drive the gate terminals of the latch transistors, substantially acting as bootstrap capacity.

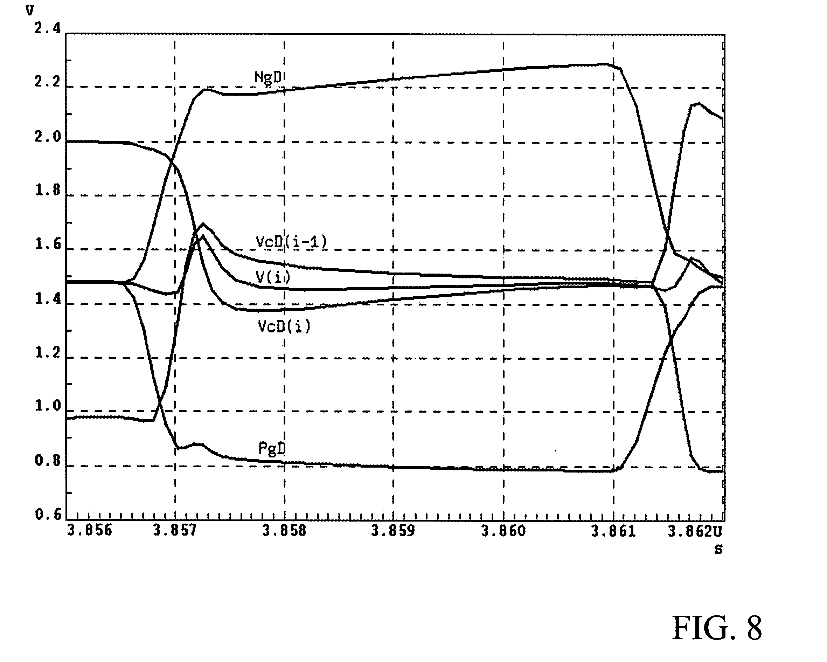

The patterns are thus obtained of the inner voltage values of the charge pump circuit 10 according to the invention for Vdd=1V shown in Figure 8.

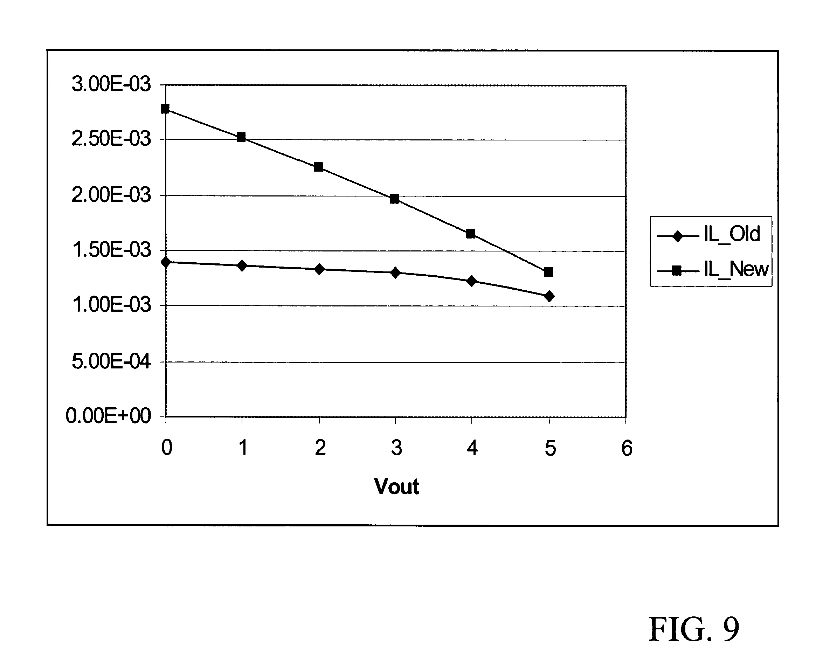

In particular, it is verified how the output voltage-current characteristic of the charge pump circuit 10, thanks to the stabilisation stage 20, improves significantly and also re-takes its linear law, as shown in Figure 9 with a comparison with the current-voltage characteristic of a charge pump circuit 1 realised according to the prior art.

However, it occurs that the charge pump circuit 10 according to the invention suffers, as it occurred for the circuits realised according to the prior art, from the problems linked to the impossibility of creating phases FX and FN that are perfectly crossed with each other.

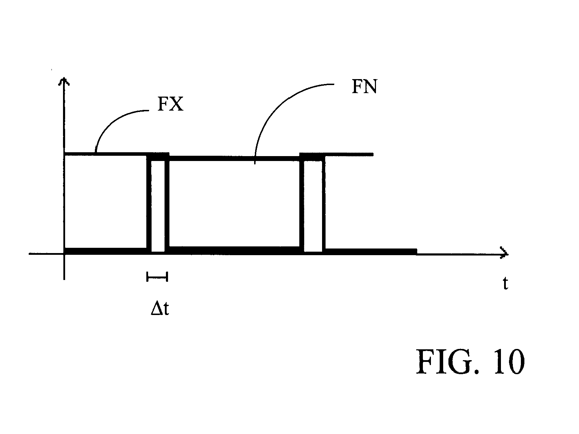

A real situation for these phases is that shown in Figure 10, where the phases FX and FN are overlapped for an overlap period $\Delta$t.

For better understanding the roots of the problems linked to this overlap period $\Delta$t, hereafter the pattern of the inner signals of the charge pump circuit 10 are analysed under the different operation conditions.

The instant in which the first phase FX goes to a high value, equal to the supply voltage Vdd, the charge sharing period of the pump capacitors connected to the nodes Up should start. In reality, due to the delay experienced by the second phase FN to go to a low value, in particular to zero i.e. to the ground, a correct charge sharing is not obtained since the transistors of the latch circuits of the charge pump stages during the overlap period $\Delta$t are not under the correct conditions for the charge sharing and, in particular, they are all under the turn-off conditions.

Under these conditions, there is no charge passage from the pump capacitor CUpi-1 connected to the node Upi-1 to the pump capacitor CUpi connected to the nose Upi, as desired, but from the pump capacitor CDowni connected to the node Downi and from the biasing capacitors, Cbn1 and Cbn2, connected to the nodes NgU and NgD, respectively, to the pump capacitor CUpi connected to the node Upi.

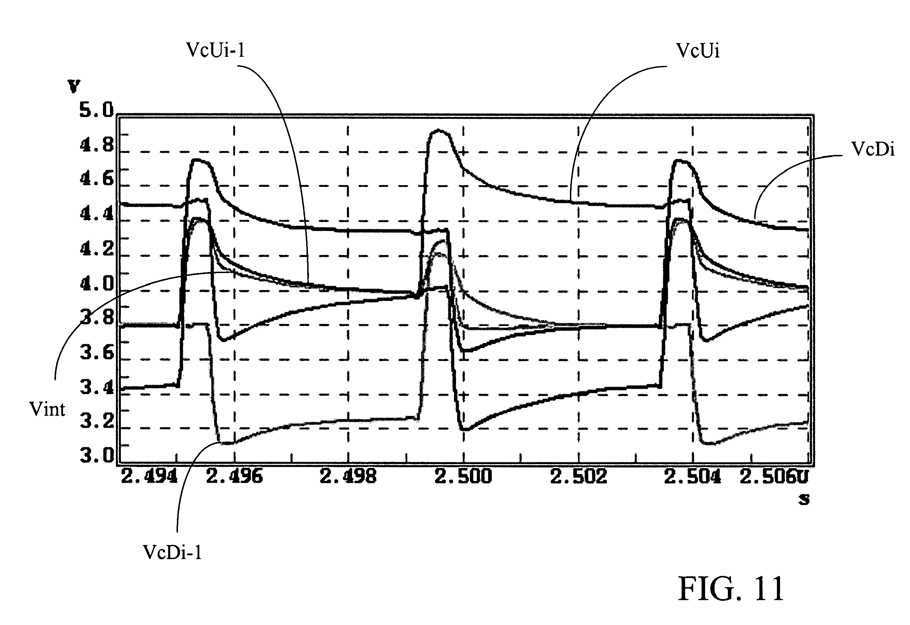

This pump capacitor CUpi thus receives more charge than the amount received by the pump capacitor CDowni connected to the node Downi in the successive period and thus this behaviour leads to an asymmetry in the charge sharing as shown in Figure 11, and thus to a wrong behaviour of the charge pump circuit 10.

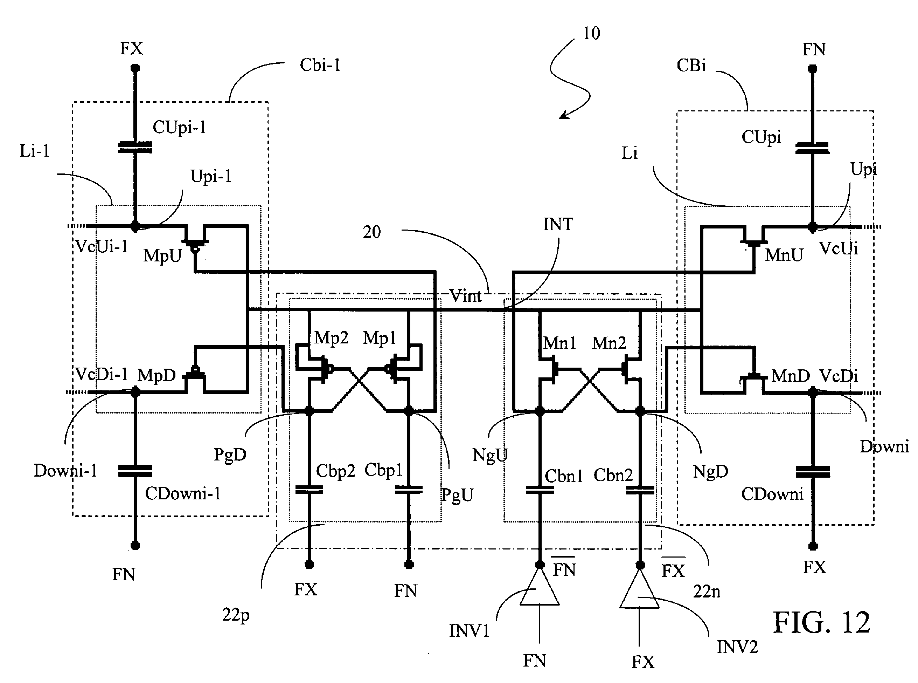

Advantageously according to the invention, a further embodiment of the charge pump circuit 10 is then proposed, as shown in Figure 12, able to overcome this problem.

In particular, the charge pump circuit of Figure 12 shows a structure similar to the charge pump circuit of Figure 7 and further comprises a first INV1 and a second logic inverter INV2 connected, between the enable terminals, FX and FN, and the biasing capacitors, Cbn1 and Cbn2, of the portion 22n of the stabilisation stage 20, in an inverted way with respect to the configuration of Figure 7.

In particular, the third biasing capacitor Cbn1 is connected, through the first inverter INV1, to the first enable terminal FN and then receives the complementary of the first phase FN, while the fourth biasing capacitor Cbn2 is connected, through the second inverter INV2, to the second enable terminal FX and then receives the complementary of the second phase FX.

In this way, advantageously according to the invention, the third and fourth control transistors, Mn1 and Mn2, suitably driven by the complementary of the phases FX and FN, remain off during the overlap period $\Delta$t, thus forcing also the fourth latch transistor MnD into the off condition.

It is also to be noted that in this way a correct charge sharing is ensured, even if the turn-on of the first and third latch transistors, MpU and MnU, occurs only after the end of the overlap period $\Delta$t thus reducing the sharing period, without however introducing particular drawbacks for the operation of the charge pump circuit 10.

It is immediate to verify that the above indicated situation also occurs in case of disoverlap of the phases FX and FN, although it relates to the control transistors Mp1 and Mp2 of the first portion 22p of the stabilisation 20 stage. The embodiment proposed for the charge pump circuit 10 and shown in Figure 12 thus solves also the problems linked to the case of disoverlap.

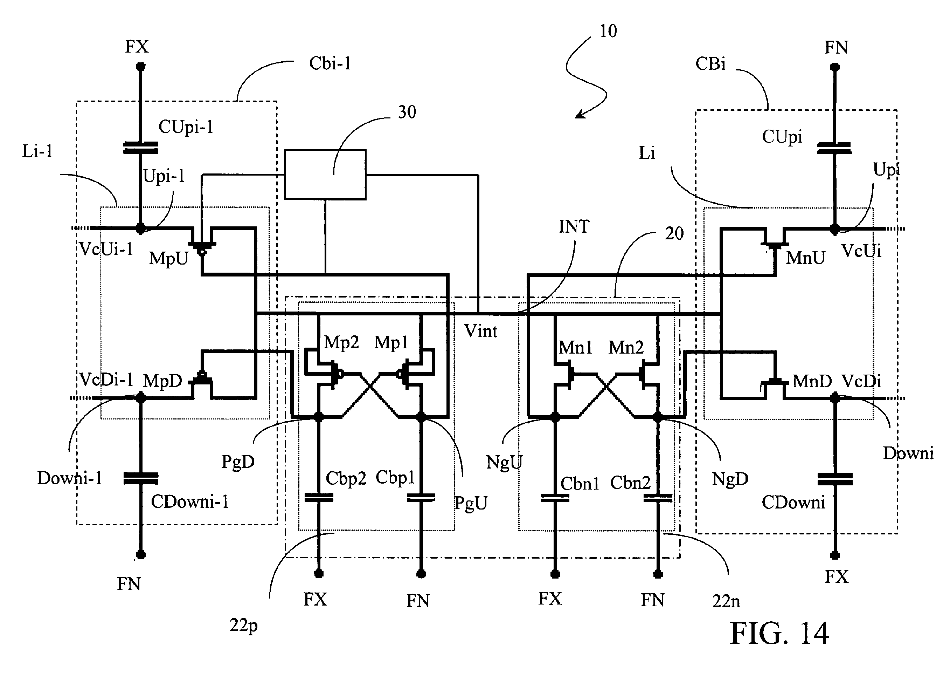

Simulations carried out on the charge pump circuit 10 illustrated in Figure 12 show how any problem of asymettry in the charge sharing has been absolutely solved. The results of these simulations are reported in Figure 14.

In conclusion, the charge pump circuit 10 according to the invention allows to efficiently bias the control terminals of the transistors contained in the latch circuits of the charge pump stages, for the whole duration of the semi-periods in which the charge sharings occur. This allows not to over-size these charge pump circuits so as to meet the specifications, but to size them according to the mathematics law characterising their typical behaviour.

It is also to be underlined that in a real circuit the well known body effect is to be taken into account, which tends to make the threshold voltage of the transistors increase, reducing the potentialities of the charge pump circuit 10.

Moreover, considering that PMOS transistors have been used as pass-transistors for the charge sharing among the charge pump stages CBi, in particular the transistors MpU and MpD, also the so called latchup phenomenon is to be taken into account, being triggered by the parasite transistors due to the junctions pnpn contained in the CMOS structures as the latch circuits Li.

Advantageously according to the invention, a second embodiment of the charge pump circuit 10 is then proposed, as shown in Figure 14, able to dynamically bias the bulk terminals of the PMOS transistors for avoiding the above indicated problems.

In particular, according to this second embodiment, the charge pump circuit 10 comprises dynamic bulk biasing blocks 30 connected to the bulk terminals of the PMOS transistors and suitable for maintaining them, instant by instant, at a maximum voltage value applied to the latch circuit Li so as to avoid the turn-on of the parasite transistors.

In particular, for simplicity of illustration, Figure 14 only shows a bulk dynamic biasing block 30 connected to the bulk terminal of the latch transistor MpU. In a similar way, the charge pump circuit 10 will be provided with a plurality of bulk dynamic biasing blocks 30, each one being connected to a bulk terminal of each PMOS transistor.

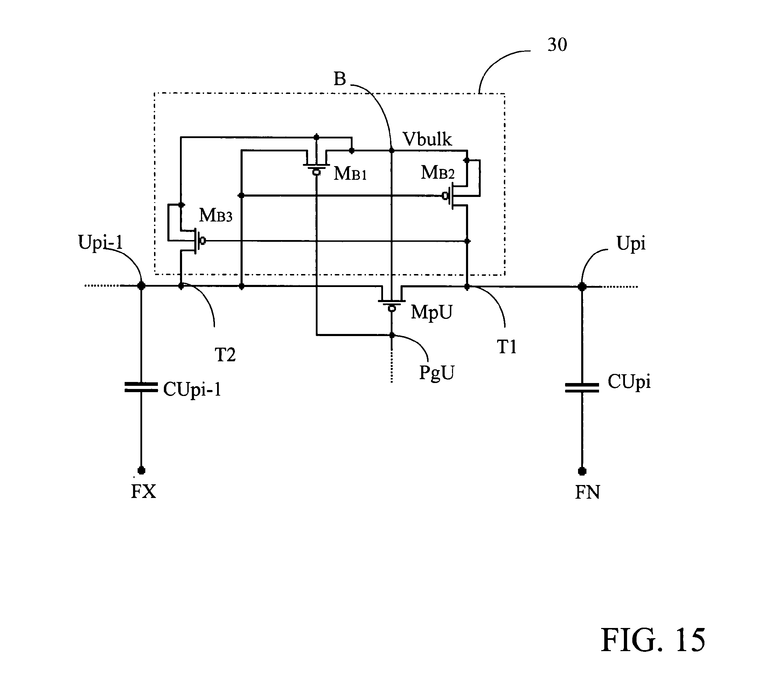

More in detail, a bulk dynamic biasing block 30 is shown in Figure 15, where, in a simplified way, the pump capacitors CUpi-1 and CUpi are shown, being connected to each other by the latch transistor MpU as well as to the enable terminals FX and FN, respectively, the latch transistor MpU having a first conduction terminal T1 connected to a first node Upi-1 where there is a first voltage VUpi-1, a second conduction terminal T2 connected to a second node Upi where there is a second voltage VUpi and a control or gate terminals connected to the central node PgU.

It is to be noted that these first and second conduction terminals, T1 and T2, are drain and source terminals, respectively source and drain terminals, of the latch transistor MpU under charge sharing conditions, respectively charge no sharing ones.

As shown, the bulk dynamic biasing block 30 according to the invention advantageously comprises:

- a first bulk biasing transistor $M_{B1}$ inserted between a bulk terminal B and the first conduction terminal T1 (and thus the first node Upi-1) of the latch transistor MpU and having a bulk terminal connected to this bulk terminal B and a control or gate terminal connected to the central node PgU (and thus to the gate terminal of the latch transistor MpU); and

- a second bulk biasing transistor $M_{B2}$ inserted between the bulk terminal B and the second conduction terminal T2 (and thus the second node Upi) of the latch transistor MpU and having a bulk terminal connected to the bulk terminal B and a control or gate terminals connected to the conduction terminal T1 (and thus to the first node Upi-1).

Advantageously, the bulk dynamic biasing block 30 further comprises:

- a third bulk biasing transistor $M_{B3}$ inserted between the bulk terminal B and the first conduction terminal T1 (and thus the first node Upi-1) of the latch transistor MpU and having a bulk terminal connected to the bulk terminal B and a control or gate terminal connected to the second conduction terminal T2 (and thus to the second node Upi).

Advantageously according to the invention, the bulk dynamic biasing block 30 operates according to the following conditions:

- FX = Vdd, FN = 0 and thus VUpi-1 > VUpi: in this case the first bulk biasing transistor $M_{B1}$ is turned on by the same mechanism turning on the transistor MpU, thus bringing the voltage VBulk on the bulk node B to a value equal to VUpi-1. Advantageously, this voltage value VUpi-1 is the highest voltage applied, under this condition, to the latch circuit Li-1; and

- FX = 0, FN = Vdd and thus VUPi-1 < VUpi: in this case the transistor MpU is off (and also the first bulk biasing transistor $M_{B1}$), while the second bulk biasing transistor $M_{B2}$ is on and brings the voltage VBulk to a value equal to VUpi.

The condition in which VUpi << VUpi-1 is also to be considered, for example in the case in which the output terminal OUT of the charge pump circuit 10 is connected to a very capacitive node having a voltage next to zero.

Under this condition, the second bulk biasing transistor $M_{B2}$ cannot be turned on. Advantageously according to the invention, the bulk dynamic biasing block 30 thus also comprises the third bulk biasing transistor $M_{B3}$ which latches - when the first bulk biasing transistor $M_{B1}$ is off - the voltage VBulk at a value equal to VUpi-1 and avoids that the same remains floating.

It is possible to summarise the operation conditions of the bulk dynamic biasing block 30 as follows:

| FX | FN | | VBulk |
|-----|-----|---------------|--------|
| Vdd | 0 | VUpi-1 > VUpi | VUpi-1 |

(continued)

| 0 | Vdd | VUpi-1 < VUpi | VUpi |
|---|-----|----------------|------|
| - | - | VUpi << VUpi-1 | VUpi-1 |

Table 4

Advantageously, the proposed charge pump circuit 10 shows an improved capacity of generating current and, in the meantime, ensures a linear behaviour of the charge pump stages, even similar to the charge pumps of the Bootstrap type, although maintaining the possibility of operating at frequencies that can also reach 150Mhz and thus using much smaller pump capacitors with respect to this known solution.

The price to be paid for reaching these results is the sole area increase due to the addition of the stabilisation stage 20, i.e. of four transistors and of four bootstrap capacitors between each pair of stages, and the relative increase of current consumption.

Finally, the charge pump circuit 10 according to the invention advantageously solves the problems linked to the body effect and to the latch-up phenomena affecting the CMOS structures, ensuring a correct dynamic biasing of the bulk terminals of the PMOS transistors comprised therein.

**Claims**

1. Charge pump circuit (10) of the latch type comprising at least one first and a second charge pump stage (CBi-1, CBi) interconnected in correspondence with an intermediate circuit node (INT), in turn comprising:

   - first pump capacitors (CUpi-1, CUpi) respectively inserted between a first and a second enable terminal (FX, FN) and respective first inner circuit nodes (Upi-1, Upi);
   - second pump capacitors (CDowni-1, CDowni) respectively inserted between said second and said first enable terminal (FX, FN) and respective second inner circuit nodes (Downi-1, Downi); as well as
   - latch transistors (MpU, MnU; MpD, MnD) inserted between each of said first and second inner circuit nodes (Upi-1, Upi; Downi-1, Downi) and said intermediate circuit node (INT),

   said first and second enable terminals (FX, FN) receiving respective phase signals (FX, FN), the one complementary to the other,
   **characterised in that** it further comprises a stabilisation circuit (20) having at least one stabilisation stage (20) inserted between said intermediate circuit node (INT) and said first and second enable terminals (FX, FN) and connected to control terminals (PgU, NgU; PgD, NgD) of said latch transistors (MpU, MnU; MpD, MnD) and suitable for supplying them with suitable control signals for ensuring their correct turn-on and turn-off during a charge sharing period of said charge pump circuit (10).

2. Charge pump circuit (10) according to claim 1, **characterised in that** said stabilisation stage (20) comprises at least one first biasing portion (22p) connected to said control terminals (PgU, PgD) of said first and second latch transistors (MpU, MpD) of said first charge pump stage (CBi-1) and a second biasing portion (22n) connected to said control terminals (NgU, NgD) of said first and second latch transistors (MnU, MnD) of said second charge pump stage (CBi).

3. Charge pump circuit (10) according to claim 2, **characterised in that** said first and second biasing portions (22p; 22n) comprise:

   - respective first biasing capacitors (Cbp1, Cbn1) inserted between said control terminals (PgU, NgU) of said first latch transistors (MpU, MnU) of said charge pump stages (CBi-1, CBi) and said second and first enable terminals (FN, FX), respectively; and
   - respective second biasing capacitors (Cbp2, Cbn2) inserted between said control terminals (PgD, NgD) of said second latch transistors (MpD, MnD) of said charge pump stages (CBi-1, CBi) and said first and second enable terminals (FX, FN), respectively.

4. Charge pump circuit (10) according to claim 3, **characterised in that** said first and second biasing portions (22p; 22n) further comprise:

- respective first control transistors (Mp1, Mn1), inserted between said intermediate circuit node (INT) and between said control terminals (PgU, NgU) of said latch transistors (MpU, MnU) of said charge pump stages (CBi-1, CBi) and having respective control terminals connected to said control terminals (PgD, NgD) of said second latch transistors (MpD, MnD) of said charge pump stages (CBi-1, CBi); and
- respective second control transistors (Mp2, Mn2), inserted between said intermediate circuit node (INT) and said control terminals (PgD, NgD) of said second latch transistors (MpD, MnD) of said charge pump stages (CBi-1, CBi) and having respective control terminals connected to said control terminals (PgU, NgU) of said first latch transistors (MpU, MnU) of said charge pump stages (CBi-1, CBi).

5. Charge pump circuit (10) according to claim 4, **characterised in that** said control transistors (Mp1, Mp2; Mn1, Mn2) are of the same type as said latch transistors (MpU, MpD; MnU, MnD).

6. Charge pump circuit (10) according to claim 4, **characterised in that** said control transistors (Mp1, Mp2) of said first biasing portion (22p) and said latch transistors (MpU, MpD) of said first charge pump stage (CBi-1) are P channel MOS transistors.

7. Charge pump circuit (10) according to claim 4, **characterised in that** said control transistors (Mn1, Mn2) of said second biasing portion (22n) and said latch transistors (MnU, MnD) of said second charge pump stage (CBi) are N channel MOS transistors.

8. Charge pump circuit (10) according to claim 3, **characterised in that** it further comprises a first and a second inverter (INV1, INV2) connected, between said second and first enable terminals (FN, FX), and said first and second biasing capacitors (Cbn1, Cbn2) of said second biasing portion (22n) of said stabilisation stage (20), so as to supply said first and second biasing capacitors (Cbn1, Cbn2) with complementary signals of said second and first phase signals (FX, FN).

9. Charge pump circuit (10) according to any of the preceding claims, **characterised in that** it comprises a plurality of charge pump stages (CB) and **in that** said stabilisation circuit (20) comprises a plurality of stabilisation stages, each stabilisation stage (20) being inserted between pairs of charge pump stages consecutive to each other.

10. Charge pump circuit (10) according to any of the preceding claims, **characterised in that** it comprises a plurality of bulk dynamic biasing blocks (30), each block being connected to a bulk terminal (B) of a latch transistor (MpU, MpD) of the PMOS type, in turn having a first and a second conduction terminal (T1, T2) and a control terminal (PgU), the bulk dynamic biasing block (30) comprising:

   - a first bulk biasing transistor ($M_{B1}$) inserted between said bulk terminal (B) and said first conduction terminal (T1) of said latch transistor (MpU, MpD) and having in turn a bulk terminal connected to said bulk terminal (B) and a control terminal connected to said control terminal (PgU) of said latch transistor (MpU, MpD); and
   - a second bulk biasing transistor ($M_{B2}$) inserted between said bulk terminal (B) and said second conduction terminal (T2) of said latch transistor (MpU, MpD) and having in turn a bulk terminal connected to said bulk terminal (B) and a control terminal connected to said first conduction terminal (T1) of said latch transistor (MpU, MpD).

11. Charge pump circuit (10) according to claim 10, **characterised in that** said bulk dynamic biasing block (30) further comprises:

   - a third bulk biasing transistor ($M_{B3}$) inserted between said bulk terminal (B) and said first conduction terminal (T1) of said latch transistor (MpU, MpD) and having in turn a bulk terminal connected to said bulk terminal (B) and a control terminal connected to said second conduction terminal (T2) of said latch transistor (MpU, MpD).

FIG. 1
PRIOR ART

FIG. 2
PRIOR ART

FIG. 3
PRIOR ART

EP 1 881 589 A1

Drive capability

FIG. 4
PRIOR ART

EP 1 881 589 A1

FIG. 5A
PRIOR ART

FIG. 5B
PRIOR ART

EP 1 881 589 A1

EP 1 881 589 A1

FIG. 5C
PRIOR ART

FIG. 5D
PRIOR ART

EP 1 881 589 A1

FIG. 6

PRIOR ART

FIG. 7

FIG. 8

FIG. 9

EP 1 881 589 A1

FIG. 10

FIG. 11

EP 1 881 589 A1

FIG. 12

EP 1 881 589 A1

FIG. 13

EP 1 881 589 A1

FIG. 14

FIG. 15

EP 1 881 589 A1

**European Patent Office**

## EUROPEAN SEARCH REPORT

Application Number

EP 06 42 5497

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/239409 A1 (JANG CHAE KYU [KR] ET AL) 2 December 2004 (2004-12-02) * the whole document * ----- | 1,9 | INV. H02M3/07 |
| A | US 2005/213781 A1 (SUZUKI TATSUYA [JP] ET AL) 29 September 2005 (2005-09-29) * abstract * * figure 4 * ----- | 1-11 | |

TECHNICAL FIELDS SEARCHED (IPC)

H02M

The present search report has been drawn up for all claims

| Place of search | Date of completion of the search | Examiner |
|---|---|---|
| The Hague | 17 April 2007 | MARANNINO, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5497

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2007

| Patent document cited in search report | | Publication date | Patent family member(s) | | Publication date |
|---|---|---|---|---|---|
| US 2004239409 | A1 | 02-12-2004 | JP<br>KR | 2004355788 A<br>20040102610 A | 16-12-2004<br>08-12-2004 |
| US 2005213781 | A1 | 29-09-2005 | CN<br>JP<br>KR | 1674444 A<br>2005278378 A<br>20060044671 A | 28-09-2005<br>06-10-2005<br>16-05-2006 |

EPO FORM P0459